# FASCICULE DE BREVET EUROPEEN

(11) **EP 1 321 005 B1**
(45) Date de publication et mention de la délivrance du brevet: **21.12.2005**
(21) Numéro de dépôt: 01972203.2
(22) Date de dépôt: 25.09.2001
(51) Int. Cl.: H04Q 7/32, H04Q 7/38

(54) **PROCEDE D'IMPLANTATION D'INFORMATIONS SUR UN IDENTIFIANT**
VERFAHREN ZUM LADEN VON INFORMATIONEN AUF EINEM IDENTIFIZIERUNGSMITTEL
METHOD FOR IMPLANTING DATA ON AN IDENTIFIER

(30) Priorité: 26.09.2000 FR 0012239
(43) Date de publication de la demande: 25.06.2003
(73) Titulaire: Transatel, 92979 Paris La Défense (FR)
(72) Inventeur: SALOMON, Bertrand, F-75116 Paris (FR); BONIFAY, Jacques, F-92100 Boulogne (FR); DURAND, Romain, F-75008 Paris (FR)
(74) Mandataire: Wagret, Frédéric
(86) Numéro de dépôt international: PCT/FR2001/002969
(87) Numéro de publication internationale: WO 2002/028133

(56) Documents cités:
- EP-A- 0 778 716
- EP-A- 0 957 651

## Description

La présente invention concerne un procédé d'implantation d'informations sur un identifiant du type carte à puce, dans différents domaines, et plus particulièrement celui des radiocommunications.

On entend par implantation toute opération avec contact physique ou non permettant d'enregistrer, de saisir, des données ou des informations sur un identifiant, par exemple dans la zone mémoire d'une carte à puce.

On connaît différents types d'identifiants tels que les cartes bancaires à puce (destinées à identifier le titulaire d'un compte bancaire) ou encore les cartes SIM (Subscriber Identity Module ou module d'identité du souscripteur) de la norme de radiocommunication dite GSM (Global System for Mobile communications ou Groupe Spécial pour les télécommunications mobiles).

La carte SIM est apte à être introduite dans un terminal, tel qu'un téléphone mobile, afin d'identifier puis d'authentifier l'abonné auprès de l'opérateur de radiocommunication.

Quel que soit l'identifiant considéré, les étapes d'identification et d'authentification se font grâce à des jeux d'informations contenus sur ledit identifiant.

Dans le cas de la carte SIM et selon la norme GSM, ces jeux d'informations comprennent notamment un numéro international de souscripteur (ou numéro IMSI) et une clé secrète d'authentification Ki. La carte SIM comporte, en outre, un algorithme de cryptographie permettant de réaliser l'authentification de la carte.

Cette dernière est, dans un premier temps, identifiée grâce au numéro IMSI, puis authentifiée avec le couple (IMSI, Ki) et l'algorithme de cryptographie.

Les différents jeux d'informations sont enregistrés dans les identifiants par les fabricants lors d'une étape dite de personnalisation, suivant immédiatement la fabrication des identifiants.

Que ce soit dans le domaine bancaire ou celui des télécommunications, les différentes informations sont très sensibles et chaque fabricant doit se doter d'un environnement sécurisé et suivre des procédures très strictes lors de la personnalisation des identifiants.

Par ailleurs, il peut se révéler intéressant pour certains prestataires (banques, opérateurs de télécommunications...) de pouvoir enregistrer de nouvelles informations sur les identifiants alors que ceux-ci sont déjà en service auprès des abonnés, et ce sans avoir à fournir un autre identifiant ou à renvoyer ledit identifiant au fabricant qui possède l'environnement sécurisé.

Afin d'éviter de renvoyer l'identifiant ou d'en fabriquer un nouveau comportant les informations à ajouter, on connaît un procédé permettant de télécharger à distance, grâce aux réseaux de télécommunications, des informations sur des identifiants du type cartes à puce.

Dans le cas particulier des cartes SIM de la norme GSM, ce procédé par voie radio est utilisé par exemple pour télécharger des informations qui ne sont pas confidentielles (telles que les répertoires téléphoniques). Les informations téléchargées n'étant pas secrètes, le téléchargement de ce type d'informations ne nécessite pas de protocole de transport sécurisé.

Si l'on souhaite télécharger des informations confidentielles, le lien radio entre l'émetteur et l'identifiant doit être sécurisé. On connaît deux procédés de sécurisation de téléchargement par voie radio qui sont des techniques de cryptographie appelées communément respectivement « à clé secrète » et « à clé publique ».

Dans le cas de la technique dite « à clé secrète », chacune des parties s'échangeant des informations détient une clé particulière, la clé secrète, que seules les deux parties connaissent. La connaissance de cette clé secrète partagée permet à chacune de décoder les informations cryptées qu'elles s'échangent.

L'inconvénient principal de cette technique de cryptographie est la gestion des différentes clés secrètes. En effet, un prestataire, tel qu'un opérateur de télécommunication possédant un grand nombre d'abonnés, doit gérer autant de clés secrètes qu'il possède d'abonnés tout en assurant la distribution et la conservation de ces différentes clés de manière sécurisée.

L'autre technique connue de cryptographie met en oeuvre une clé privée et une clé publique. Cette technique repose sur la connaissance du couple (clé privée, clé publique) afin de pouvoir authentifier un identifiant.

Ainsi, l'une des parties détient la clé privée, tandis que la clé publique est diffusée à toutes les autres parties. Ainsi, la partie disposant de la clé privée est apte, par le biais d'algorithmes mathématiques, à se faire authentifier par une autre partie ayant la connaissance de sa clé publique.

Cette technique de cryptographie à « clé privée » et « clé publique » présente l'inconvénient de ralentir de manière importante les échanges d'informations lors du téléchargement. En outre, cette technique engendre des coûts importants puisque dans le cas d'un identifiant du type carte à puce, un microprocesseur dédié est en général nécessaire pour pouvoir exécuter les algorithmes mathématiques utilisés lors de l'authentification.

Dans ce contexte on connaît aussi un procédé décrit par EP-A-0 778 716 (AT&T WIRELESS SERVICES INC.) 11 juin 1997.

Dans ce contexte, la présente invention propose un procédé d'implantation d'informations confidentielles sur un identifiant palliant les inconvénients de l'art antérieur, notamment sans avoir à produire un nouvel identifiant ou renvoyer l'ancien chez le fabricant.

A cette fin, selon l'invention, le procédé d'implantation d'un jeu d'informations sur un identifiant, du type carte à puce, délivré à un souscripteur par un prestataire, ledit jeu d'informations permettant d'authentifier le souscripteur vis-à-vis du prestataire après la mise en service de l'identifiant, comporte les étapes :
- d'enregistrement, avant la mise en service de l'identifiant par le prestataire, d'une première partie du jeu d'informations sur l'identifiant,
- d'enregistrement, après la mise en service de l'identifiant, d'une seconde partie du jeu d'informations sur l'identifiant.

Avantageusement, l'enregistrement de la seconde partie du jeu d'informations est effectué par téléchargement par voie radio.

De préférence, le jeu d'informations comporte au moins un couple d'informations, ledit couple d'informations comportant un numéro d'identification de l'identifiant ainsi qu'une clé secrète d'authentification.

Selon une forme particulière de réalisation, le numéro d'identification correspond à un numéro international de souscripteur du type IMSI et la clé secrète d'authentification correspond à la clé Ki, définis par la norme GSM.

Avantageusement, la seconde partie du jeu d'informations, la partie téléchargée, est le numéro IMSI du couple (IMSI, Ki).

Selon une forme préférée de réalisation, l'identifiant comporte une pluralité de jeux d'informations, l'identifiant étant, par exemple, une carte du type carte SIM définie par la norme GSM et le prestataire un opérateur de télécommunications.

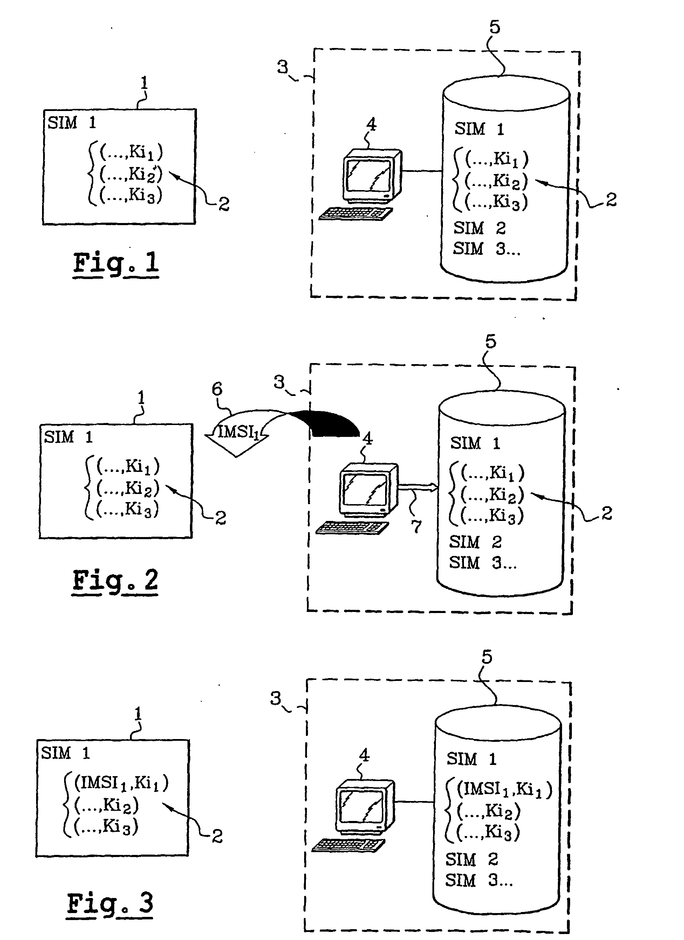

L'invention sera mieux comprise à la lumière de la description qui suit se rapportant à un exemple de réalisation illustratif mais en aucun cas limitatif, en référence aux dessins annexés dans lequel les figures 1, 2 et 3 illustrent les différentes étapes du procédé selon l'invention.

Dans la forme de réalisation décrite en relation avec les figures 1, 2 et 3, l'identifiant est une carte à puce du type carte SIM apte à être introduite dans un terminal de radiocommunication mobile, connu en lui-même et non représenté.

La figure 1 représente de façon schématisée l'étape initiale du procédé selon l'invention.

La carte SIM 1 comporte différentes informations qui sont enregistrées lors d'une phase dite de personnalisation suivant immédiatement la fabrication de la carte SIM 1.

Ces différentes ,informations sont composées d'une série de couples d'informations 2 dont seul l'un des éléments est enregistré sur la carte SIM 1. Cet élément est constitué, pour chaque couple 2, par une clé secrète d'authentification du type Ki, telle que définie par la norme GSM.

L'autre élément du couple d'informations 2 n'est pas, à ce stade du procédé, enregistré sur la carte SIM 1. Ce second élément sera constitué, pour chaque couple, d'un numéro international du type IMSI.

En conséquence, la carte SIM 1 comporte une série de couples d'informations 2 dont seul l'un des deux éléments, la clé d'identification Ki, est enregistré sur la carte SIM 1.

La figure 1 représente en outre un environnement sécurisé 3 dans lequel se trouve une plate-forme de téléchargement 4 reliée à une base de données 5 de type connu. La plate-forme de téléchargement 4 est, par exemple, un ordinateur connecté aux équipements du réseau GSM permettant l'envoi de données tels que les centres serveurs de messages courts du type SMS.

La base 5 comporte les données nécessaires au prestataire, en l'occurrence l'opérateur de télécommunication mobile, pour l'identification, l'authentification et la gestion de ses différents abonnés.

La base de données 5 comporte donc les couples d'informations 2 correspondant respectivement à chaque carte SIM délivrée par l'opérateur de télécommunications, numérotées sur la figure 1 SIM 1, SIM 2, SIM 3, etc.

A ce stade du procédé, comme sur la carte SIM 1, chaque couple d'informations 2,de la base de données 5 correspondant à ceux de la carte SIM 1 ne comprend qu'un seul élément, les différentes clés d'authentification (Ki₁, Ki₂, Ki₃), chaque clé d'authentification Ki ne correspondant pour l'instant à aucun numéro IMSI.

Il est à noter que, dans la forme de réalisation représentée sur les figures 1, 2 et 3, la carte SIM 1 comporte trois couples d'informations 2, étant entendu qu'il peut en comporter un nombre supérieur ou inférieur.

En outre, la carte SIM 1 comporte au moins un couple d'informations complet de base, c'est-à-dire comprenant à la fois un numéro international IMSI et une clé d'authentification Ki, afin de pouvoir permettre au souscripteur au moins une connexion de base avec un opérateur de télécommunication.

La figure 2 représente la seconde étape du procédé selon l'invention, au cours de laquelle un ou plusieurs numéros internationaux IMSI sont enregistrés dans la carte SIM 1.

En effet, par l'intermédiaire de la plate-forme de téléchargement 4, selon les besoins et les souhaits du souscripteur de la carte SIM 1, un numéro international IMSI₁ est téléchargé sur la carte SIM 1. Ce numéro IMSI₁ est associé, au sein de l'un des couples d'informations 2 présent sur ladite carte SIM 1, à une clé d'authentification Ki₁, la première disponible par exemple.

Selon une forme préférée de réalisation, ce téléchargement du numéro international IMSI₁ est réalisé par voie radio (flèche 6), par le biais du terminal dans lequel est insérée la carte SIM 1, en transitant sur le réseau GSM.

Ce téléchargement par voie radio est effectué de manière connue, par exemple selon la technique utilisée pour l'envoi de messages courts, et ce grâce au couple (IMSI, Ki) de base enregistré sur la carte SIM 1.

Le lien radio lors du téléchargement n'a pas besoin d'être sécurisé car un numéro IMSI n'est pas très confidentiel. L'interception du numéro international IMSI est possible mais d'aucune utilité car il n'est nécessaire de posséder le couple (IMSI, Ki) pour pouvoir effectuer une connexion. Or, les clés d'authentification Ki ne transitent pas par le réseau GSM et sont confinées soit sur la carte SIM 1, soit dans la base de données 5 en environnement sécurisé.

Dans le même temps que le téléchargement, la plate-forme de téléchargement 4 envoie, de manière connue, à la base de données 5 le même numéro international IMSI₁, qui est associé, parmi les couples d'informations 2, à la même clé d'authentification Ki₁ que sur la carte SIM 1 (flèche 7).

La plate-forme de téléchargement 4 permet de reconstituer, sur la carte SIM 1 et dans la base de données 5, les différents couples (IMSI, Ki) à la demande.

Ainsi, comme le montre la figure 3, la carte SIM 1 et la base de données 5 de l'opérateur comportent un nouveau couple d'informations 2 complet car comportant un numéro international IMSI₁ ainsi qu'une clé secrète d'authentification K1₁.

La carte SIM 1 présente donc, en plus du couple (IMSI, Ki) de base, un second couple d'informations (IMSI₁, Ki₁) apte à permettre au terminal dans lequel est insérée la carte SIM 1 une connexion différente de celle que permet le couple de base (IMSi, Ki).

Cette connexion différente peut, par exemple, correspondre à une connexion à un réseau différent de celui du réseau correspondant au couple (IMSI, Ki) de base (dans le même pays ou dans un pays différent), ou à un second abonnement, toujours sur le même réseau.

En répétant ainsi l'opération de la figure 2, on aboutit à une carte SIM 1 comportant différents couples (IMSI, Ki), correspondant respectivement chacun à une connexion différente, par exemple à un réseau différent.

Le procédé selon l'invention est applicable à tous types d'identifiants sur lesquels des informations doivent être implantées

## Revendications

1. Procédé d'implantation d'un jeu d'informations (2) sur un identifiant (1), du type carte à puce, délivré à un souscripteur par un prestataire, ledit jeu d'informations (2) permettant d'authentifier le souscripteur vis-à-vis du prestataire après la mise en service de l'identifiant (1), **caractérisé en ce qu'**il comporte les étapes :
- d'enregistrement, avant la mise en service de l'identiftant (1) par le prestataire, d'une première partie du jeu d'informations (2) sur l'identifiant (1),
- d'enregistrement, après la mise en service de l'identifiant (1), d'une seconde partie du jeu d'informations sur l'identifiant (2).

2. Procédé selon la revendication 1, **caractérisé en ce que** l'enregistrement de la seconde partie du jeu d'informations (2) est effectué par téléchargement (6).

3. Procédé selon la revendication précédente, **caractérisé en ce que** le téléchargement (6) est effectué par voie radio.

4. Procédé selon l'une des revendications précédentes, **caractérisé en ce que** le jeu d'informations (2) comporte au moins un couple d'informations.

5. Procédé selon la revendication précédente, **caractérisé en ce que** le couple d'informations (2) comporte un numéro d'identification de l'identifiant (1) ainsi qu'une clé secrète d'authentification.

6. Procédé selon la revendication précédente, **caractérisé en ce que** le numéro d'identification correspond à un numéro international de souscripteur du type IMSI et que la clé secrète d'authentification correspond à la clé Ki, définis par la norme GSM.

7. Procédé selon la revendication précédente, **caractérisé en ce que** la seconde partie du jeu d'informations (2) est le numéro IMSI du couple (IMSI, Ki).

8. Procédé selon l'une des revendications précédentes, **caractérisé en ce que** l'identifiant (1) comporte une pluralité de jeux d'informations (2).

9. Procédé selon l'une des revendications précédentes, **caractérisé en ce que** l'identifiant (1) est une carte du type carte SIM définie par la norme GSM.

10. Procédé selon l'une des revendications précédentes, **caractérisé en ce que** le prestataire est un opérateur de télécommunications.

## Patentansprüche

1. Verfahren zum Laden eines Satzes von Informationen (2) auf ein Identifikationsmittel (1) vom Typ Chipkarte, das einem Benutzer von einem Anbieter zur Verfügung gestellt wird, wobei der Satz von Informationen (2) es ermöglicht, den Benutzer gegenüber dem Anbieter nach Inbetriebnahme des Identifikationsmittels (1) zu authentisieren, **gekennzeichnet durch** die Schritte:
- Aufzeichnen, vor Inbetriebnahme des Identifikationsmittels (1) **durch** den Benutzer, eines ersten Teiles des Satzes von Informationen (2) auf dem Identifikationsmittel (1)
- Aufzeichnen, nach Inbetriebnahme des Identifikationsmittels (1), eines zweiten Teiles des Satzes von Informationen auf dem Identifikationsmittel (2)

2. Verfahren nach Anspruch 1, **dadurch gekennzeichnet, dass** die Aufzeichnung des zweiten Teiles des Satzes von Informationen (2) durch Fernladen (6) ausgeführt wird.

3. Verfahren nach dem vorhergehenden Anspruch, **dadurch gekennzeichnet, dass** das Fernladen (6) auf dem Funkweg erfolgt.

4. Verfahren nach einem der vorhergehenden Ansprüche, **dadurch gekennzeichnet, dass** der Satz von Informationen (2) wenigstens ein Paar von Informationen umfasst.

5. Verfahren nach dem vorhergehenden Anspruch, **dadurch gekennzeichnet, dass** das Paar von Informationen (2) eine Identifikationsnummer des Identifikationsmittels (1) sowie einen geheimen Authentisierungsschlüssel umfasst.

6. Verfahren nach dem vorhergehenden Anspruch, **dadurch gekennzeichnet, dass** die Identifikationsnummer einer internationalen Benutzernummer vom Typ IMSI entspricht und der geheime Authentisierungsschlüssel dem Schlüssel Ki entspricht, wie von der GSM-Norm definiert.

7. Verfahren nach dem vorhergehenden Anspruch, **dadurch gekennzeichnet, dass** der zweite Teil des Satzes von Informationen (2) die IMSI-Nummer des Paares (IMSI, Ki) ist.

8. Verfahren nach einem der vorhergehenden Ansprüche, **dadurch gekennzeichnet, dass** das Identifikationsmittel (1) eine Mehrzahl von Sätzen von Informationen (2) aufweist.

9. Verfahren nach einem der vorhergehenden Ansprüche, **dadurch gekennzeichnet, dass** das Identifikationsmittel (1) eine Karte von dem durch die GSM-Norm definierten SIM-Typ ist.

10. Verfahren nach einem der vorhergehenden Ansprüche, **dadurch gekennzeichnet, dass** der Anbieter ein Fernmeldenetzbetreiber ist.

## Claims

1. Method for implanting a set of data (2) on an identifier (1), of the smart card type, delivered to a subscriber by a provider, said set of data (2) making it possible to authenticate the subscriber with respect to the provider after the identifier (1) has been put into service, **characterized in that** it comprises the steps:
- of recording, before the provider puts the identifier (1) into service, a first part of the set of data (2) on the identifier (1),
- of recording, after the identifier (1) has been put into service, a second part of the set of data on the identifier (2).

2. Method according to Claim 1, **characterized in that** the recording of the second part of the set of data (2) is effected by downloading (6).

3. Method according to the preceding Claim, **characterized in that** the downloading (6) is effected by radio.

4. Method according to one of the preceding Claims, **characterized in that** the set of data (2) comprises at least one pair of data.

5. Method according to the preceding Claim, **characterized in that** the pair of data (2) comprises a number for identifying the identifier (1) as well as a secret authentication key.

6. Method according to the preceding Claim, **characterized in that** the identification number corresponds to an international subscriber number of the IMSI type and that the secret authentication key corresponds to the Ki key, defined by the GSM standard.

7. Method according to the preceding Claim, **characterized in that** the second part of the set of data (2) is the IMSI number of the pair (IMSI, Ki).

8. Method according to one of the preceding Claims, **characterized in that** the identifier (1) comprises a plurality of sets of data (2).

9. Method according to one of the preceding Claims, **characterized in that** the identifier (1) is a card of the SIM card type defined by the GSM standard.

10. Method according to one of the preceding Claims, **characterized in that** the provider is a telecommunications operator.
